# EUROPEAN PATENT APPLICATION

(11) **EP 4 591 956 A1**
(43) Date of publication of application: **30.07.2025**
(21) Application number: 25153598.5
(22) Date of filing: 23.01.2025
(51) Int. Cl.: A63F 13/24, A63F 13/285, G09B 21/00

(54) **VIDEO GAME SYSTEM WITH IMPROVED ACCESSIBILITY FEATURES**

(30) Priority: 24.01.2024 GB 202400925
(71) Applicant: Sony Interactive Entertainment Europe Limited, London W1F 7LP (GB)
(72) Inventor: MILLS, Chloe, London, W1F 7LP (GB)
(74) Representative: Gill Jennings & Every LLP

(57) **Abstract**

A video game system (1) is disclosed, comprising: an input device (4) configured to be held by or in contact with a user in use to operate the video game system, the input device comprising one or more haptic actuators (51-54); and a processor (20) configured to receive text or speech characters to be conveyed to a user and encode the characters in a haptic signal; wherein the one or more haptic actuators are configured to receive the haptic signal and actuate based on the haptic signal to convey the characters to the user.

## Description

### FIELD OF THE INVENTION

The invention relates to video game consoles. In particular, the invention relates to improved accessibility features for video game consoles.

### BACKGROUND

Video game systems have accessibility features to convey text or speech information to users who are visually impaired, such as text-to-speech, and users who are hearing impaired, such as subtitles. However, these options may not be suitable for users who are both visually impaired and hearing impaired. There is therefore a need for alternative accessibility features to facilitate interaction between such users and video game systems.

It is an object of the invention to address this demand.

### SUMMARY OF INVENTION

According to a first aspect of the present invention, there is provided a video game system, comprising: an input device configured to be held by or in contact with a user in use to operate the video game system, the input device comprising one or more haptic actuators; and a processor configured to receive text or speech characters to be conveyed to a user and encode the characters in a haptic signal; wherein the one or more haptic actuators are configured to receive the haptic signal and actuate based on the haptic signal to convey the characters to the user.

In this way, the haptic actuators enable the video game system to convey text or speech information to users who are both visually and hearing impaired using a predetermined code or pattern of stimulation that represents the text or speech characters.

The haptic actuators can be configured to generate any kind of stimulation that is detectable through a user's sense of touch or weight. In some examples, the haptic actuators can generate stimulation in the form of vibration, clicks or knocks, a manipulation of a centre of gravity of the input device (e.g., using a movable mass within the input device), or a movement mechanism that can be actuated to cause a tactile element to protrude from an outer surface of the device.

The video game system can comprise a video game console. The video game console can be located remotely to the user, for example as part of a cloud gaming system, in which case an additional local console may be provided for communicating with the remote video game console. Alternatively, a video game console may be provided locally to the user.

The input device can be any suitable peripheral device configured to be held or in contact with the user during use. Alternatively, the input device can be a part of a handheld video game console. For instance, the input device could be formed by left and right grip portions of a handheld video game console, the left and right grip portions adjacent a central output display.

The characters can be speech characters, e.g. transmitted by a user in a multiplayer online gaming environment. In this case, the video game system may be configured to transform the speech characters into text using known speech-to-text methods, then generate the haptic signal based on the transformed speech. Alternatively, the characters can be text characters taken from in-game or in-system text or subtitles.

The haptic signal may be any signal configured that encodes the characters to be conveyed that is configured to be provided to the haptic actuators. The "haptic signal" may also be described as a "signal".

Optionally, the one or more haptic actuators are configured to generate localised stimulation that is perceptible by a user at different regions of the input device. In this way, a language character can be conveyed more quickly using a more complex spatial pattern of haptic stimulation. The different regions can be any distinguishable internal or external (i.e., surface) portions of the input device. The different regions may be non-overlapping for greater distinguishability by the user.

Alternatively, the one or more haptic actuators could be configured to generate simulation in a single region and use a varying intensity or pattern of stimulation to convey different characters. However, the use of several distinct regions enables characters to be conveyed more efficiently and in a manner that is easier for a user to distinguish.

Optionally, the different regions correspond to one or more dots of a braille character. In this way, the haptic actuators can provide stimulation in a pattern that hearing and visually impaired users may already be familiar with, reducing the amount of learning required for such users to interpret the characters. Additionally, braille systems generally use a 3 x 2 or 4 x 2 grid structure regardless of the corresponding spoken and written language. Therefore, providing different distinguishable regions in this way can accommodate visually and hearing impaired users regardless of their preferred spoken or written language. A further advantage is that braille characters utilise binary information elements (namely, the presence or absence of dots in a grid), which is well suited to representation by haptic stimulation.

The different regions can "correspond" to one or more dots in a braille character in the sense that the presence or absence of a dot in a braille character to be conveyed to the user is represented by a matching presence or absence of stimulation at the different regions.

In other examples, the characters can be conveyed using any other known or bespoke tactile language code.

Optionally, the video game system is configured to use at least one of the different regions to indicate the presence of more than one dot of in a braille character, such as two dots, preferably two adjacent dots. This may be easier for the user to distinguish compared to two separate regions that are stimulated simultaneously or in close succession to indicate the presence of the more than one dots.

Optionally, the different regions are arranged approximately in a grid of at least three rows and at least two columns. In this way, when the different regions are stimulated, a pattern of stimulation is provided that is in a similar arrangement to a braille character. This provides a familiar code to users that can read braille.

The different regions may be arranged approximately in a grid of at least four rows and at least two columns. In one example, this arrangement can be used to represent Unicode braille, which consists of a 4 x 2 braille cell. Such a 4 x 2 grid can, however, also support the representation of non-Unicode braille (i.e. a 3x2 braille cell), by providing an additional row of regions that can be used to represent the presence of two braille dots simultaneously.

Optionally, the input device comprises two triggers, and a haptic actuator is provided at or near each trigger to generate localised stimulation at each trigger corresponding to a top row of the grid of different regions. The two haptic actuators may comprise vibration units. In this way, the solution of the present invention is more compatible with existing video game controllers, which are a form of input device that are often provided with haptic actuators in the form of vibration units at or near the triggers.

Optionally, the one or more haptic actuators comprise a plurality of haptic actuators configured to generate localised stimulation at the different regions simultaneously to convey a text or speech character. In this way, a single text or speech character can be conveyed more quickly by avoiding the need for pauses between stimulation at the different regions. The plurality of haptic actuators may be located at or near the different regions.

Optionally, the one or more haptic actuators are configured to generate localised stimulation at the different regions in a sequence to convey a text or speech character. In this way, a single text or speech character may be easier for a user to interpret because the user does not have to recognise stimulation at several distinct locations on the input device simultaneously, or at least at fewer distinct locations simultaneously.

In one example, the sequence may be a two part sequence, where the different regions on one side of the input device are actuated in a first part of the sequence, and the different regions on a second side of the input device are actuated in a second part of the sequence, after a brief pause. This can make it easier for the user to distinguish between the actuations on the left and right sides.

Optionally, the sequence comprises a pause or pauses of 20 ms or less. This may provide a sufficient pause between stimulation at the different regions while avoiding an undue delay that slows the rate at which characters can be conveyed. The pause could also be more than 20 ms in other embodiments. The length of the pause may be settable by a user, for example using a settings menu of the video game system, to accommodate the needs and preferences of individual users.

The pause may be user-adjustable using a menu system provided by the video game system. Similarly, pauses provided between different characters or sentences may also be user-adjustable and in general may be configured to be longer than pauses between stimulation at the different regions that represent a single character.

Optionally, the total number of haptic actuators may be less than the number of different regions, wherein at least one of the haptic actuators is configured to generate localised stimulation in several distinct regions. This can be achieved by moving the at least one haptic actuator within the device or actuating in different ways (e.g. at different frequencies), in some specific examples.

Optionally, the one or more haptic actuators are configured to generate localised stimulation at 6 or more different regions of the input device. In this way, a region can be provided that corresponds to each dot of a braille character. As described above, less than 6 haptic actuators may be provided. A total of four haptic actuators may be provided, which may be more compatible with existing input devices that comprise four haptic actuators.

Optionally, the one or more haptic actuators comprise one or more vibration units configured to generate vibration of the input device. In this way, the solution of the present invention can utilise a type of haptic actuator that is already present in existing input devices for improved backwards-compatibility. Additionally, vibration can be produced locally in different distinct regions of the input device while also being easy to detect by the user.

Optionally, at least one of the one or more vibration units is configured to vibrate at different frequencies to generate vibration of the input device that is perceived by the user as originating from different corresponding regions of the input device. In this way, fewer haptic actuators are required than the number of different regions, which saves space within the input device and reduces the total cost of the input device. Vibrating at different frequencies may generate standing wave patterns in the input device that cause some parts of the input device to vibrate more strongly than others. The user-perceived different regions hence may correspond to regions of the input device that vibrate close to a peak amplitude. The at least one of the one or more vibration units can also be described as configured to vibrate at different frequencies to cause different corresponding regions of the input device to vibrate most strongly or with a peak amplitude.

Optionally, the at least one of the one or more vibration units is configured to vibrate at a first frequency to provide vibration perceived as originating from a first region of the input device and at a second frequency to provide vibration perceived as originating from a second region of the input device, wherein the first frequency is higher than the second frequency and the first region is closer to an upper end of the input device than the second region, the upper end positioned distally from the user during use. Optionally, two of the one or more vibration units may be configured in this way. The two vibration units may be provided in left and right grip portions of the input device, respectively, wherein the grip portions are configured to be held by the left or right hand of a user, respectively. This provides a solution that is compatible with existing video game controllers while also enabling a braille character to be represented.

Optionally, the first frequency is about 400 Hz and the second frequency is about 220 or 130 Hz, or the first frequency is about 400 or 220 Hz and the second frequency is about 130 Hz. It has been found that vibrations at these frequencies are particularly distinguishable by the user at different distinct regions of some input devices and may avoid haptic fatigue compared to other frequencies.

In another example, the first frequency can be about 360 Hz and the second frequency can be about 220 or 60 Hz, or the first frequency can be about 360 Hz and the second frequency can be about 360 or 220 Hz and the second frequency can be about 60 Hz.

It would be appreciated that each frequency of vibration may be adjustable by a user to any suitable frequency within the operating range of the one or more haptic actuators, in order to meet the user's specific needs.

The unit Hertz (Hz) as used herein can refer to vibrations per second.

Optionally, the input device comprises four vibration units. The input device may comprise a total of four vibration units. The input device may comprise only four vibration units and no further haptic actuators. In this way, the solution of the present invention can be made backwards compatible with existing video game controllers.

Optionally, the one or more vibration units are configured to vibrate at a frequency, or frequencies, between 1 and 500 Hz. It has been found that frequencies in this range can be distinguished by a user. A selection within this range may also be more backwards-compatible with existing vibration units configured to operate in this range.

Optionally, the input device is a handheld video game controller. In this way, the input device can be the primary peripheral device that is typically used to operate the video game system and the need for a separate peripheral or input device is avoided.

Optionally, the video game system is configured to enable a user to adjust one or more of an intensity, duration, frequency, or spacing of stimulation (which can be a spacing in a sequence of stimulation or actuation representing a single character as well as a spacing between stimulation representing different characters or different words) produced by actuation of the one or more haptic actuators. In this way, the video game system enables the tailoring of the accessibility features more specifically to the needs and preferences of different users. These characteristics, or any other adjustable characteristic of the stimulation, may be customisable by a user individually for each character and/or individually for each haptic actuator,

Optionally, the video game system is configured to convey a plurality of characters or words using a sequence of actuation of the one or more haptic actuators, the sequence comprising a pause between actuation representing different characters or words, wherein the video game system enables a user to adjust a duration of the pause. In this way, the user can adjust the speed of the actuation to match their own braille reading speed. The length of each pause may be implemented by inserting a corresponding pause in the haptic signal when the haptic signal is generated. The video game system may provide a settings menu that can be operated by the user to adjust the duration of the pause.

According to a second aspect of the present invention, there is provided a peripheral device configured for use with the video game system of any of the embodiments of the first aspect of the invention, configured to be held by or in contact with a user in use to operate the video game system, comprising: one or more haptic actuators configured to receive a haptic signal encoding text or speech characters and actuate based on the haptic signal to convey the characters to the user.

According to a third aspect of the present invention, there is provided a computer-implemented method for conveying text information to a user of a video game system, comprising: receiving a plurality of text or speech characters to be conveyed to a user; encoding the characters in a haptic signal; receiving the haptic signal at one or more haptic actuators of an input device, the input device configured to be held by or in contact with a user in use to operate the video game system; and actuating the one or more haptic actuators based on the haptic signal to convey the characters to the user.

### BRIEF DESCRIPTION OF DRAWINGS

Embodiments of the invention are now described, by way of example, with reference to the drawings, in which:
Figure 1 shows a schematic diagram of a video game system according to an embodiment of the invention;
Figure 2 shows a schematic diagram of an input device of a video game system according to an embodiment of the invention;
Figure 3 shows a schematic diagram of an input device of a video game system according to an embodiment of the invention;
Figure 4 shows the format of a braille character;
Figure 5A shows a braille character;
Figure 5B shows a schematic diagram of a peripheral device of a video game system conveying the braille character of Figure 5A in an embodiment of the invention; and
Figure 6 shows a flowchart of a method of operating a video game system according to an embodiment of the invention.

### DETAILED DESCRIPTION

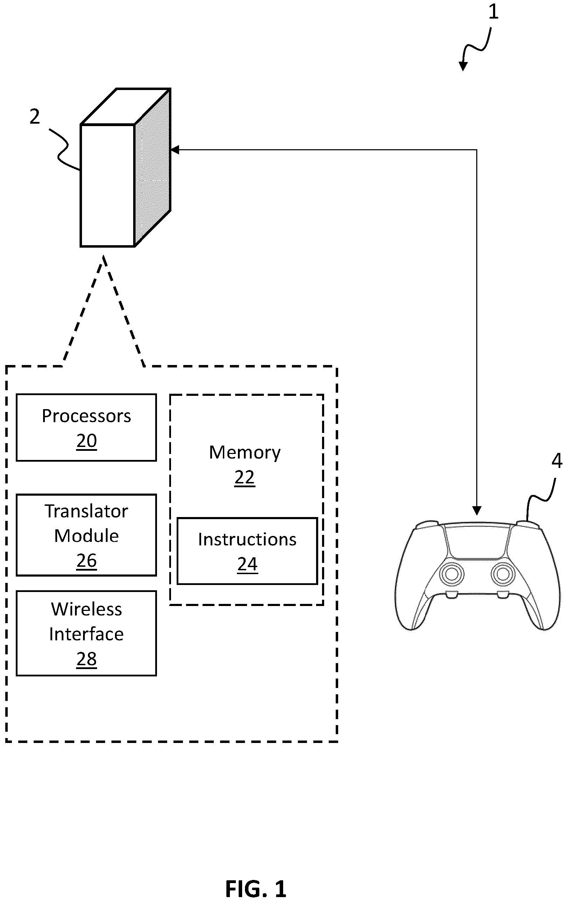

Figure 1 shows a schematic diagram of a video game system 1 according to an embodiment of the invention.

The video game system comprises a video game console 2 and a handheld video game controller 4. The video game console 2 comprises one or more processors 20 and a memory 22 for storing executable instructions 24 that can be executed by the one or more processors 20. The instructions 24 can be executed to operate a translator module 26, which is used to perform accessibility features, described in greater detail below. The video game console 2 further comprises a wireless interface 28 for communicating with the video game controller 4, which can be any suitable wireless interface known in the art.

It would be appreciated that the video game console 2 may comprise various other features typical of video game consoles, such as disk drives, wired interfaces for connecting to the video game controller 4 and display screens, a wireless internet interface, power buttons, and the like.

In other example embodiments, the video game system 1 may be configured to operate over a cloud network. In this case, the video game console 2 may be located remotely to the user and communicate over a network with a console device that is local to the user. The local console device may be configured mainly for communicating with a cloud gaming service that provides the remote video game console 2 and connecting with local peripherals, such as a display device and local controller devices, such as the video game controller 4.

In this example, the video game console 2 and the video game controller 4 used to control the video game console 2 are separate devices. In other embodiments, the video game system 1 may comprise a handheld console that comprises one or more input devices as well as an output device in a single unit. In this case, accessibility aspects of the video game controller 4 described below may be performed by the input device portion or portions of the handheld console.

In this example, the video game system 1 comprises a video game controller 4. However, embodiments of the invention can be implemented with any suitable input device or peripheral input device that is configured to be held or in contact with a user in use to operate the video game console 2, such as a controller adapted for use with an augmented or virtual reality system.

The translator module 26 is performed by the video game console 2 in this embodiment. However, the translator module 26 could be performed by a processor of the video game controller 4, or in any other suitable device of the video game system 1, in other embodiments. More generally, the functionality of the translator module 26 described further below can be performed by any suitable processor or processors.

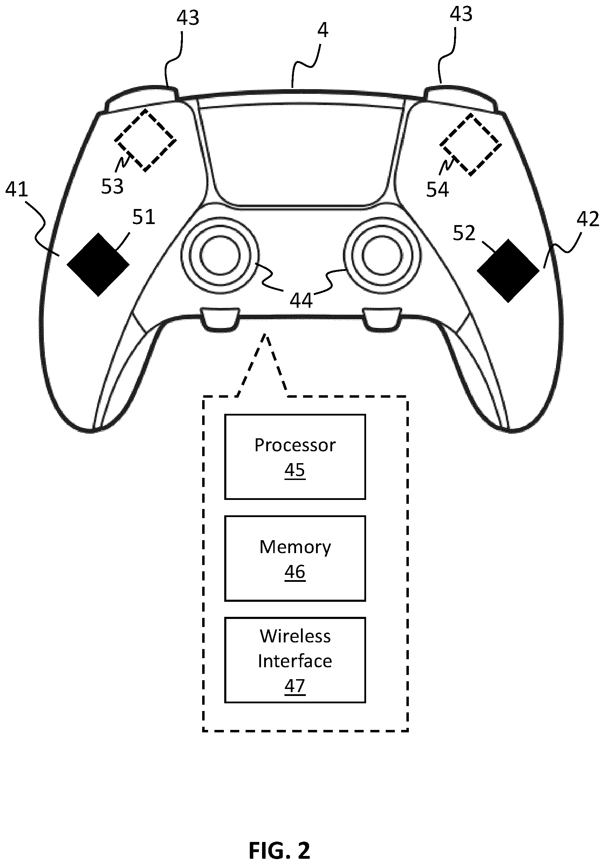

Figure 2 shows a schematic diagram of the video game controller 4. The video game controller 4 comprises a left grip 41 and a right grip 42, each configured to be held by a user during use. The video game controller 4 comprises shoulder buttons 43 and a further plurality of buttons (not shown) for operating the video game console 2. A shoulder button 43 is positioned at the top of the video game controller 4 above each of the left grip 41 and the right grip 42. The video game controller 4 further comprises two triggers (not shown) beneath the shoulder buttons 43, located towards a back face of the video game controller 4. Two joysticks 44 are provided on a top face of the video game controller 4.

Internally, the video game controller 4 comprises one or more processors 45 and a memory 46 for storing executable instructions to be executed by the one or more processors 45 to control various functions of the video game controller 4. A wireless interface 47 is provided for communicating with the video game console 2, which may be provided in addition to a wired interface. In other example embodiments, operations or functions of the video game controller 4 may be controlled directly by the video game console 2 via the wireless interface 47 and/or a wired interface.

In this example, the video game controller 4 also comprises a rechargeable battery (not shown) and charging port (not shown) for providing power to the video game controller 4. In other examples, the video game controller 4 may be configured to receive replaceable batteries.

The video game controller 4 may comprise any number and arrangement of buttons, joysticks, or other input mechanisms in other example embodiments. It would be appreciated that the video game controller 4 may also comprise various other features, such as a touchpad, a speaker, a headphone port, and the like.

Some users of the video game system 1 may be hearing impaired, such that text-to-speech is not a suitable accessibility option for conveying text information to the user. The same users may also be visually impaired, which makes other accessibility options, such as on-screen subtitles, less suitable. The present invention provides a way to communicate text or speech characters using haptic technology to provide an alternative accessibility option for such users.

To facilitate this, the video game controller 4 comprises a plurality of internal vibration units 51-54 that are independently actuatable to generate localised vibration of the video game controller 4. The plurality of vibration units include a left grip vibration unit 51 provided approximately within the left grip 41 and a right grip vibration unit 52 provided approximately within the right grip 42. A left trigger vibration unit 53 and a right trigger vibration unit 54 are also provided close to the triggers towards the back of the video game controller 4 (as indicated by the dashed lines) on the left and right sides of the video game controller 4, respectively.

The plurality of vibration units 51-54 may comprise any suitable mechanism known in the art, such as an eccentric rotary motor or a voice coil motor. In other embodiments, any other suitable kind of haptic actuator capable of producing localised stimulation that can be sensed by a user through their sense of touch or weight may be provided alternatively or in addition. In one alternative example, one or more haptic actuators could be configured to generate a click or knock feeling in specific areas of the video game controller 4, rather than continuous vibration.

In this example, the plurality of vibration units 51-54 are positioned at different locations within the video game controller 2 to generate vibration at different corresponding regions. Other embodiments may utilise a single haptic actuator to generate stimulation at different parts of the video game controller 2. For instance, a movement mechanism for moving the haptic actuator to different internal locations of the video game controller 2 could be provided.

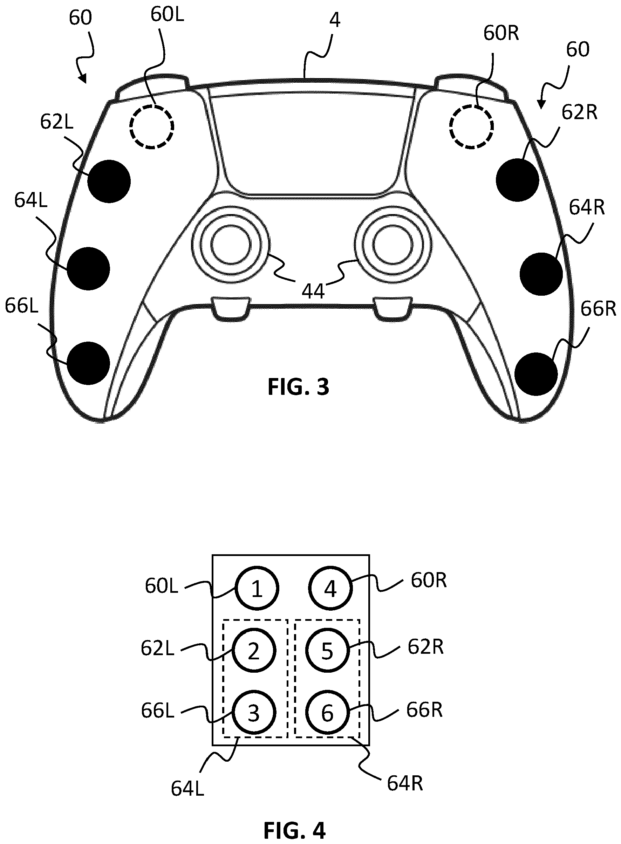

Figure 3 shows a schematic diagram of the video game controller 4 that highlights different regions 60 where the sensation of vibration can be generated.

The left and right trigger vibration units 53, 54 are located near the left and right triggers of the video game controller 4, respectively, so that, when actuated, the user can feel a vibration of the left and right triggers. This is indicated schematically in Figure 3 by the regions 60L and 60R, respectively. The regions 60L and 60R are dashed to indicate their location towards the back face of the video game controller 4 that is hidden from the perspective of Figure 3. The frequency of vibration of the left and right trigger vibration units 53, 54 may be selected from 1-500 Hz and may be tuneable by a user in each case, e.g. via a console menu, to suit their particular needs and preferences.

The left and right grip vibration units 51, 52 are configured to vibrate at one of a "low", "mid", or "high" frequency. Depending on the frequency of vibration selected, the user perceives the vibration as originating from one of a corresponding left or right high region 62L, 62R, left or right mid region 64L, 64R, or left or right low region 66L, 66R. This may occur due to different frequencies of vibration causing different parts of the video game controller 4 to resonate. In other words, each user-perceived region of vibration may correspond to an inner region or outer surface region of highest vibrational amplitude, or a region where the video game controller 4 is felt by a user to vibrate most strongly.

In the video game controller 4, higher frequencies are perceived as originating from higher up the left grip 41 and the right grip 42. The high frequency is therefore used to stimulate the regions 62L and 62R, the mid frequency is used to stimulate the regions 64L and 64R, and the low frequency is used to stimulate the regions 66L and 66R. The particular frequencies of the high, mid and low frequencies may be selected from the range 1-500 Hz and tuneable by a user in each case to suit their particular needs and preferences. In one example, the high, mid and low frequencies may be about 360 Hz, 220 Hz, and 60 Hz, respectively. In another example, the high, mid, and low frequencies may be about 400 Hz, 220 Hz, and 130 Hz, respectively, which has been found to be more effective in some cases.

In other controllers having other geometries, higher frequencies of vibration may not necessarily generate stimulation on "higher" parts (i.e., parts further from the user in use) of the controller.

In this example, the different regions 60 are used to represent one or more dots of a braille character.

Figure 4 shows a schematic diagram of a generic braille character, also referred to as a "braille cell", which consists of 1-6 dots, each arranged on one of six points in a 3 x 2 grid. Ordinarily, a braille character is represented by a raised dot on a surface, such as on embossed paper, which a user can touch to read. The number and positioning of the dots distinguish different braille characters. Each dot in the grid has an associated numerical label of one to six, as shown in Figure 4.

The different regions 60 shown in Figure 3 each correspond to one or more of the grid points of a braille character. The presence or absence of a dot in the 3 x 2 grid can be represented by the presence or absence of vibration at the corresponding region. In this way, the present invention allows a braille character to be conveyed to a user through vibration.

In particular, the region 60L corresponds to the top-left dot ("dot 1"), the region 62L corresponds to the middle-left dot ("dot 2"), and the region 66L corresponds to the bottom-left dot ("dot 3"). The region 60R corresponds to the top-right dot ("dot 4"), the region 62R corresponds to the middle-right dot ("dot 5"), and the region 66R corresponds to the bottom-right dot ("dot 6"). The regions 60 have similar relative positioning on the video game controller 4 as in the braille cell. Specifically, the regions 60 are arranged approximately in a 4 x 2 grid when the video game controller 4 is viewed from above, as shown in Figure 3.

The region 64L is located between the regions 62L and 66L and can be used to indicate the presence of both of dots 2 and 3 in a single character. Similarly, the region 64R is located between the regions 62R and 66R and can be used to indicate the presence of both of dots 5 and 6 in a single character. Providing at least one region corresponding to more than one dot provides a way to convey a whole braille character at once (i.e., rather than using a sequence of vibrations) using less than 6 vibration units. Locating the region 64L (or 64R) between the 62L and 66L regions (or between the 62R and 66R regions) may be more intuitive for the user.

Other example video game controllers may comprise further vibration units, such as six or more vibration units, in which case it may not be necessary to convey the presence of two dots of a braille character using a single region in this way.

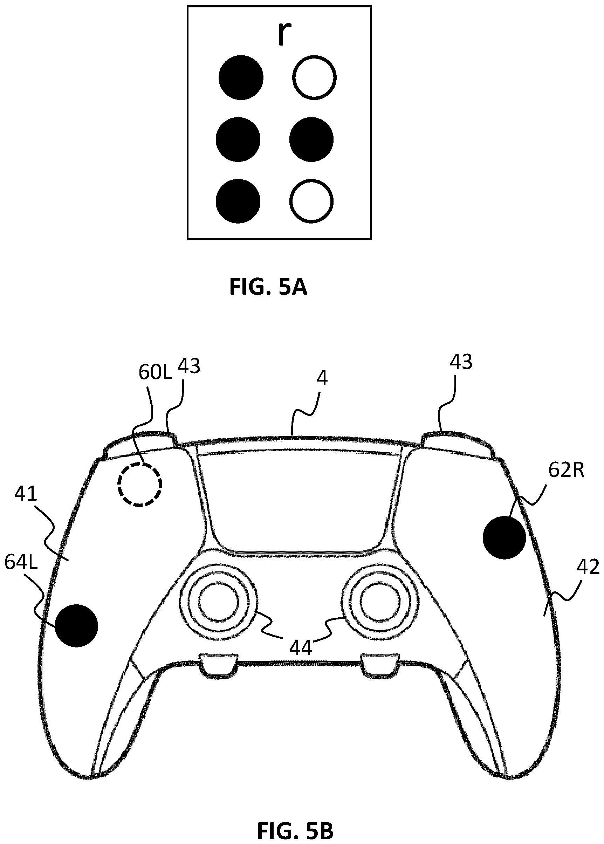

Figure 5A shows the braille character "r" represented in English braille. In this character, dots 1-3 and dot 5 are present (i.e., these grid points would be raised when represented on a surface), whereas dots 4 and 6 are not present (i.e., these grid points would be flat when represented on a surface).

Figure 5B shows how the character "r" can be conveyed using the video game controller 4. The left trigger vibration unit 53 vibrates, generating vibration at region 60L to indicate the presence of dot 1 of the character. The left grip vibration unit 51 vibrates at its allocated mid frequency to indicate the presence of dots 2 and 4, which is perceived by the user to originate from region 64L. The right trigger vibration unit 54 does not vibrate because dot 4 is not present in the character "r". Therefore, the user experiences no (or negligible) vibration at region 60R. Of dots 5 and 6, only dot 5 is present in the braille character "r". Therefore, the right grip vibration unit 52 vibrates at its allocated high frequency to stimulate highest region on the right grip 42, region 62R, thereby indicating the presence of the dot 5 and the absence of dot 6.

These actuations of the left trigger vibration unit 53, the left grip vibration unit 51 and the right grip vibration unit 52 can occur simultaneously, which may enable the character "r" to be conveyed as fast as possible. Alternatively, the actuations can occur in a sequence in close succession, with a pause of 20 milliseconds (ms) or less between each actuation. This may make it easier for the user to distinguish between and recognise the vibrations at each region. The pattern can by any suitable pattern. In one example, pauses can be provided between the vibration at each region. In another example, the left-side regions can be stimulated simultaneously, then after a brief pause the right-side regions can be stimulated simultaneously. Using a sequence can avoid lower frequency vibrations from being drowned out by higher frequency vibrations elsewhere.

The user may be enabled to select whether characters are conveyed using simultaneous vibrations or a sequence of vibrations, depending on their preferences. In the latter case, the user may also be provided with an option to adjust the gap between successive vibrations in a single character, in order to make vibrations representing a single character easier to distinguish. These options may be adjustable by a settings menu provided by the video game console 2.

Words and sentences can be conveyed to the user by repeatedly conveying characters through tactile stimulation in the manner of Figure 5B. Gaps between characters, words, and sentences may also be adjustable by a user through a settings menu provided by the video game console 2.

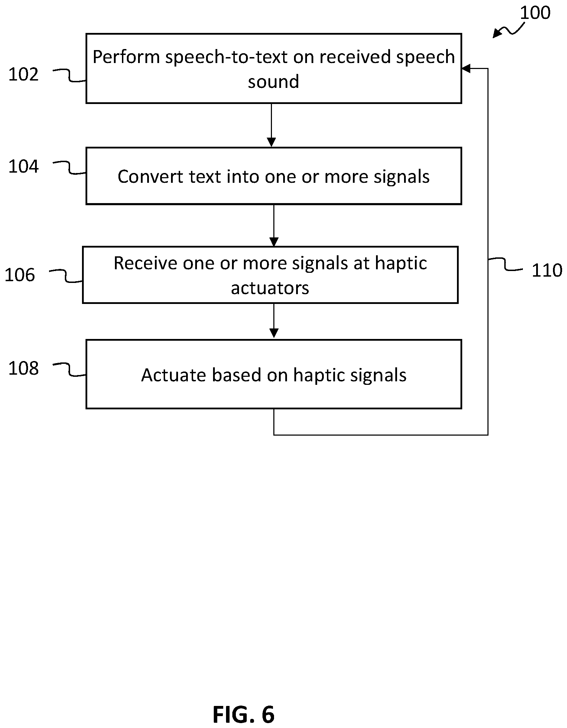

Figure 6 shows a method 100 of operating of a video game system that can be performed to convey on-screen or in-game text or speech characters to a user. The method 100 is described below with reference to the example video game system 1 described above, however, it would be appreciated that the method 100 can be performed using any suitable video game system.

In this example, the method 100 is performed by the translator module 26 of the video game console 2, although more generally the method can be performed by any processor of a video game system.

In step 102, which is optional, the translator module 26 can receive a sound signal and perform speech-to-text transcription to convert the sound signal into text. The speech-to-text transcription can be performed using any suitable hardware and/or software. Step 102 may be particularly useful for enabling a user of the video game system 1 to communicate with another user remotely over the internet (e.g. in multiplayer online game) who is using a microphone to transmit speech. In other cases, text to be displayed on screen, or voice-lines within a game, typically have associated text files or corresponding subtitles. Therefore, conversion of this information from a speech or sound signal into text would not typically be necessary.

In step 104, the text to be conveyed is passed as an input to the translator module 26. The translator module 26 then generates a haptic signal for each of the plurality of vibration units 51-54 based on the braille characters corresponding to the input text that encodes the characters in the haptic signals.

The translator module 26 may generate the haptic signals with reference to various user settings accessible by a menu system of the video game system 1. The user settings can specify whether the braille characters are to be conveyed using simultaneous vibrations or a sequence of vibrations at the different regions 60, which would affect the spacing of features in each signal. The translator module 26 may also refer to user settings to determine the particular frequencies at which each of the vibration units 51-54 should vibrate, as well as gaps or pauses that should be provided between subsequent letters, words and sentences. The settings may also enable a user to specify a vibration pulse length. The settings may enable a user to specify any of the above options on a per character basis, for maximum flexibility.

In this example, the haptic signals are analogue waveforms that provide a variable frequency at which motors in the vibration units 51-54 should rotate at in each point in time. For example, in a first time period, a haptic signal for the left grip vibration unit 51 may comprise an oscillation at the "low" frequency to convey the presence of dot 3 in a braille character. In a second, later time period corresponding to a character where dots 2 and 3 are absent, the waveform of the haptic signal may have an amplitude of zero. In a later third time period, the haptic signal may comprise an oscillation at the "mid" frequency to convey the presence of dots 5 and 6 simultaneously in a braille character. Haptic signals for the remaining vibration units 52-54 can be generated in a similar manner to convey the presence or absence of the remaining dots of each braille character. The haptic signals may be generated in a ".wav" file, or any other suitable audio or non-audio file format.

In other examples, the translator module 26 could convert the text into one or more digital signals for each of the vibration units 51-54 that encode the same instructions in a different format. The vibration units could then be configured to actuate based on the digital haptic signal. Alternatively, a downstream component could receive the digital haptic signal and convert it into an analogue haptic signal for actuation by the vibration units 51-54.

In embodiments utilising other types of haptic actuators, haptic signals may be generated in a similar manner as described above.

At step 106, the haptic signals are received at the corresponding vibration units 51-54.

Although steps 104 and 106 are presented as discrete steps, it would be understood that the haptic signals could also be provided to the vibration units 51-54 continuously as they are generated, to reduce latency.

At step 108, the vibration units 51-54 each actuate based on their corresponding received haptic signal. The user can sense each vibration through their sense of touch and determine the text or speech characters that are being conveyed using their prior knowledge of braille. This can allow the user to receive text and speech information from the video game system 1 and respond with an appropriate input using the video game controller 4.

In step 110, steps 102-108 can be repeated for further text or speech characters as required.

Although the method above has been described using the specific tactile language of braille, it would be appreciated that the same method could be adapted to other known or bespoke tactile languages.

## Claims

1. A video game system, comprising:
an input device configured to be held by or in contact with a user in use to operate the video game system, the input device comprising one or more haptic actuators; and
a processor configured to receive text or speech characters to be conveyed to a user and encode the characters in a haptic signal;
wherein the one or more haptic actuators are configured to receive the haptic signal and actuate based on the haptic signal to convey the characters to the user.

2. The video game system of claim 1, wherein the one or more haptic actuators are configured to generate localised stimulation that is perceptible by a user at different regions of the input device, wherein the different regions correspond to one or more dots of a braille character.

3. The video game system of claim 2, wherein the different regions are arranged approximately in a grid of at least three rows and at least two columns.

4. The video game system of any of claim 3, wherein the input device comprises two triggers, and wherein a haptic actuator is provided at each trigger to generate localised stimulation at each trigger corresponding to a top row of the grid.

5. The video game system of any of claims 2 to 4, wherein the one or more haptic actuators comprise a plurality of haptic actuators configured to generate localised stimulation at the different regions simultaneously to convey a text or speech character.

6. The video game system of any of claims 2 to 4, wherein the one or more haptic actuators are configured to generate localised stimulation at the different regions in a sequence to convey a text or speech character.

7. The video game system of any of claims 2 to 6, wherein the one or more haptic actuators are configured to generate localised stimulation at 6 or more different regions of the input device.

8. The video game system of any of the preceding claims, wherein the one or more haptic actuators comprise one or more vibration units configured to generate vibration of the input device.

9. The video game system of claim 8, wherein at least one of the one or more vibration units is configured to vibrate at different frequencies to generate vibration of the input device that is perceived by the user as originating from different corresponding regions of the input device.

10. The video game system of claim 9, wherein the at least one of the one or more vibration units is configured to vibrate at a first frequency to provide vibration perceived as originating from a first region of the input device and at a second frequency to provide vibration perceived as originating from a second region of the input device, wherein the first frequency is higher than the second frequency and the first region is closer to an upper end of the input device than the second region, the upper end positioned distally from the user during use.

11. The video game system of any of claims 8 to 10, wherein the input device comprises four vibration units.

12. The video game system of any of the preceding claims, wherein the video game system is configured to enable a user to adjust one or more of an intensity, duration, frequency, or spacing of stimulation produced by actuation of the one or more haptic actuators.

13. The video game system of any of the preceding claims, wherein the video game system is configured to convey a plurality of characters or words using a sequence of actuation of the one or more haptic actuators, the sequence comprising a pause between actuation representing different characters or words, wherein the video game system enables a user to adjust a duration of the pause.

14. A peripheral device configured for use with the video game system of any of the preceding claims, configured to be held by or in contact with a user in use to operate the video game system, comprising:
one or more haptic actuators configured to receive a haptic signal encoding text or speech characters and actuate based on the haptic signal to convey the characters to the user.

15. A computer-implemented method for conveying text information to a user of a video game system, comprising:
receiving a plurality of text or speech characters to be conveyed to a user;
encoding the characters in a haptic signal;
receiving the haptic signal at one or more haptic actuators of an input device, the input device configured to be held by or in contact with a user in use to operate the video game system; and
actuating the one or more haptic actuators based on the haptic signal to convey the characters to the user.
